Europäisches Patentamt

European Patent Office

Office européen des brevets

(19)

(11) Veröffentlichungsnummer: **0 008 684**

**A1**

(12) **EUROPÄISCHE PATENTANMELDUNG**

(21) Anmeldenummer: **79102801.2**

(22) Anmeldetag: **03.08.79**

(51) Int. Cl.³: **G 21 C 17/10**
**G 01 K 1/02**

(30) Priorität: **08.08.78 AT 5762/78**

(43) Veröffentlichungstag der Anmeldung:
**19.03.80 Patentblatt 80/6**

(84) Benannte Vertragsstaaten:
**AT BE CH DE FR GB IT LU NL SE**

(71) Anmelder: **INTERATOM Internationale**
**Atomreaktorbau GmbH**
**c/o Siemens AG Postfach 261**
**D-8000 München 22(DE)**

(72) Erfinder: **Fleck, Carl M., Prof. Dr.**
**Atominstitut Oster. Hochschulen Schüttelst.115**
**A-1020 Wien(AT)**

(54) **Verfahren und Vorrichtung zur Messung der lokalen Leistung in Kernreaktoren.**

(57) Ein Verfahren wird angegeben, mittels dessen die über seine Länge unterschiedliche Leistung von Brennelementen in Kernreaktoren gemessen werden kann. Die so gewonnenen Messdaten dienen in bekannter Weise der Regelung und Überwachung des Reaktors, bei dem es sich vorzugsweise um einen natriumgekühlten schnellen Brutreaktor handelt. Das Verfahren sieht vor, an einer Anzahl von paarweise im Abstand voneinander angeordneten Punkten (16) eines Brennstabes die Temperaturdifferenz zu messen, aus der dann die Werte für die Leistung ableitbar sind.

Die Messung erfolgt durch hintereinandergeschaltete Thermoelemente, wobei die Übergangsstellen an die gewünschten Messpunkte gelegt werden. Der mit den Thermoelementen versehene Brennstab ist abwechselnd mit Tabletten (1, 2) unterschiedlicher Materialzusammensetzung bzw. unterschiedlicher Brennstoffkonzentration und damit auch unterschiedlichen Wärmeeigenschaften gefüllt. Die Anzahl der Messpunktpaare wird in Abhängigkeit der Wärmeleitfähigkeit der verschiedenen Materialien gewählt. Die mit den Thermoelementen in Berührung stehenden Teile der Brennstabfüllung sollen aus einer Mischung von Spalt- und Brutstoff bestehen, in der der abgebrannte Spaltstoff jeweils durch den aus dem Brutstoff neugebildeten ersetzt wird.

FIG 3

EP 0 008 684 A1

Croydon Printing Company Ltd

INTERATOM                                    24.476.1

Internationale Atomreaktorbau GmbH

D-5060 Bergisch Gladbach 1


**Verfahren** und Vorrichtung zur Messung der lokalen
**Leistung in Kernreaktoren**


**Die Erfindung** bezieht sich auf ein Verfahren zur
**Messung** der lokalen Leistung in Kernreaktoren mit
**über** den Reaktorkern verteilten instrumentierten
**Brennelementen** bzw. Meßlanzen.
**Die Messung** der lokalen Leistung in einem Reaktor-
**kern** gehört zu den wichtigsten Größen, die sowohl
**für die** Regelung als auch für die Reaktorschutzsysteme
**von** grundlegender Bedeutung sind.

**Zur** Gewinnung dieser Meßgröße gibt es eine Reihe von
**Verfahren,** die sich in Leichtwasserreaktoren durch-
**aus** bewährt haben. Die meisten dieser Verfahren be-
**nutzen** als Hilfsgröße den Neutronenfluß, manchmal
**aber** auch den prompten Gammafluß. Bei diesem Verfah-
**ren** werden vor allem Spaltkammern und Betastrom-
**detektoren** verwendet.

Diese in thermischen Reaktoren bewährten Detektoren
verlieren aber ihre Zeitstandsfestigkeit, sobald
man sie in den schnellen Brutreaktoren einsetzen
will. Der Grund ist nicht nur die erhöhte Strahlenbelastung, sondern vor allem die Temperatur, die
bei diesem Reaktor wesentlich höher ist. Allein die
Na-Austrittstemperatur beträgt etwa 550$^o$C; die Teile
der Kerninstrumentierung erwärmen sich je nach Konstruktion noch erheblich stärker.

Als Ausweg aus dieser Situation wurde als Kerninstrumentierung eine Temperaturmessung an der Na-Austrittsöffnung der Brennelemente vorgesehen. Dadurch
ist es möglich, zumindest die integrale Leistung
der einzelnen Brennstäbe zu überwachen, da man über
die Aufwärmespanne auf die Brennelementleistung schließen kann. Mit diesem Verfahren wird jedoch keine
axiale Leistungsverteilung erhalten, obwohl gerade
diese für die Kontrolle einer etwaigen, durch die
Regelstäbe hervorgerufenen Schieflast notwendig wäre.

Da anscheinend Thermoelemente als einzige die nötige
Zeitstandsfestigkeit aufweisen, kann natürlich über
instrumentierte Brennelemente die Brennstofftemperatur überwacht werden, aber die Messung der Thermospannung wird durch die von der Strahlung erzeugten
parasitären Ströme gestört, jene Ströme, die gerade
bei den Betastromdetektoren zur Leistungsmessung herangezogen werden.

Diese Nachteile der bekannten Verfahren werden nun
erfindungsgemäß dadurch beseitigt, daß in dem instrumentierten Brennelement bzw. der Meßlanze die Temperatur an zwei oder einem Mehrfachen von zwei in Abstand
voneinander angeordneten Punkten gemessen und die
Temperaturdifferenz zwischen jeweils zwei Meßpunkten bzw.
dem Mehrfachen davon der lokalen Leistung zugeordnet
wird.

Die physikalischen Grundlagen der vorliegenden Erfindung seien kurz dargelegt. Löst man die Wärmeleitungsgleichung für einen zylinderförmigen Brennstab,
so erhält man für die lineare Stableistung (linear
rating) $q_{St}$, wenn gewisse Vernachlässigungen gemacht
werden, die aber für den schnellen Brüter als auch
für den schwach angereicherten thermischen Reaktor
gelten

$$q_{St} = 4\pi \int_{T_1}^{T_0} \lambda \, dT$$

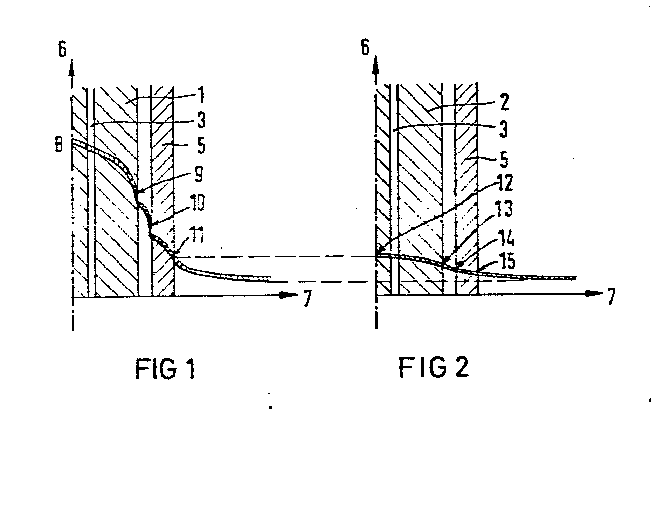

dabei bedeuten $\lambda$ die Wärmeleitfähigkeit $[J/cm.s.K]$
und $T_0$ bzw. $T_1$ die Zentrums- bzw. Oberflächentemperatur des Brennstoffes, die in Abbildung 1 unter der
Nummer 8 bzw. 9 erklärt sind. Das Integral heißt Leitfähigkeitsintegral und läßt sich mit einem geeigneten Mittelwert $\bar{\lambda}$ in guter Näherung lösen, so daß man
für die lineare Stableistung erhält

$$q_{St} = 4\pi \bar{\lambda} (T_0 - T_1)$$

Dies bedeutet eine direkte Proportionalität zwischen
linearer Stableistung und dem Temperaturgefälle
zwischen Brennstabzentrum und Brennstaboberfläche.
Aber auch für die Wärmeübertragung im Spalt erhält
man

$$q_{St} = 2\pi r_1 \, k_\lambda (T_1 - T_2)$$

$k\lambda$ ist die entsprechende Wärmedurchgangszahl
$[J/cm^2.s.K]$ und $T_2$ die entsprechende Hüllrohrwand-
Innentemperatur, 10 in Fig. 1. Ebenso erhalten wir
für die Wärmeleitung in der Brennstabhülle für dünne
Hüllwandstärken

$$q_{st} = 2 \lambda_H \pi (T_2 - T_3) / \ln \frac{r_3}{r_2}$$

$\lambda_H$ ist dabei die Wärmeleitfähigkeit des Hüllrohrmaterials und $T_3$ die Hüllrohrwand- Außentemperatur
(11 in Fig. 1). $r_1$, $r_2$ und $r_3$ sind die Radien von
Brennstoff, Hüllrohrinnenwand und Hüllrohraußenwand.

Wie man aus den obigen Gleichungen erkennen kann, ergibt sich eine direkte Proportionalität nicht nur
zwischen dem Temperaturgefälle im Brennstoff und
der linearen Stableistung, sondern auch zwischen jeder
weiteren Stufe des Wärmeflusses bis zur Außenwand des
Hüllrohres und der linearen Stableistung.
Um die Probleme bei der technischen Umsetzung des
oben angedeuteten Meßprinzips zu verstehen, muß man
sich auch über die Abmessungen eines Brennstabes,
wie er etwa bei schnellen Brütern Verwendung findet
klar werden. Der Außendurchmesser des Brennstabes
beträgt 6 mm, der Durchmesser des Brennstoffes etwa 5
mm. Geht man nun davon aus, daß die Drähte der
Thermoelemente zur Sicherung der nötigen Temperatur-
und Zeitstandsfestigkeit Durchmesser zwischen 0,5 mm
und 1 mm haben werden, so sieht man, daß die Kontaktierung eines Brennstoffpellets an zwei radial unterschiedlichen Positionen mit den vorgegebenen technologischen Randbedingungen nur schwer durchführbar ist.

In Weiterbildung des erfindungsgemäßen Verfahrens
wird nun vorgeschlagen, Thermoelemente so in Serie
zu schalten, daß sich die Übergangsstelle abwechselnd
an Orten jeweils unterschiedlicher Temperatur befinden und die resultierende Thermospannung zweier Übergangsstellen ein Maß für den Temperaturgradient darstellt ,wobei durch die wiederholte Serienschaltung
dieser Anordnung ein Vielfaches dieser resultierenden Thermospannung erhalten und der lokalen Reaktorleistung zugeordnet werden kann.

Die Erfindung wird nun weiter unter Bezugnahme auf
die Zeichnungen beschrieben. In den Zeichnungen zeigt:

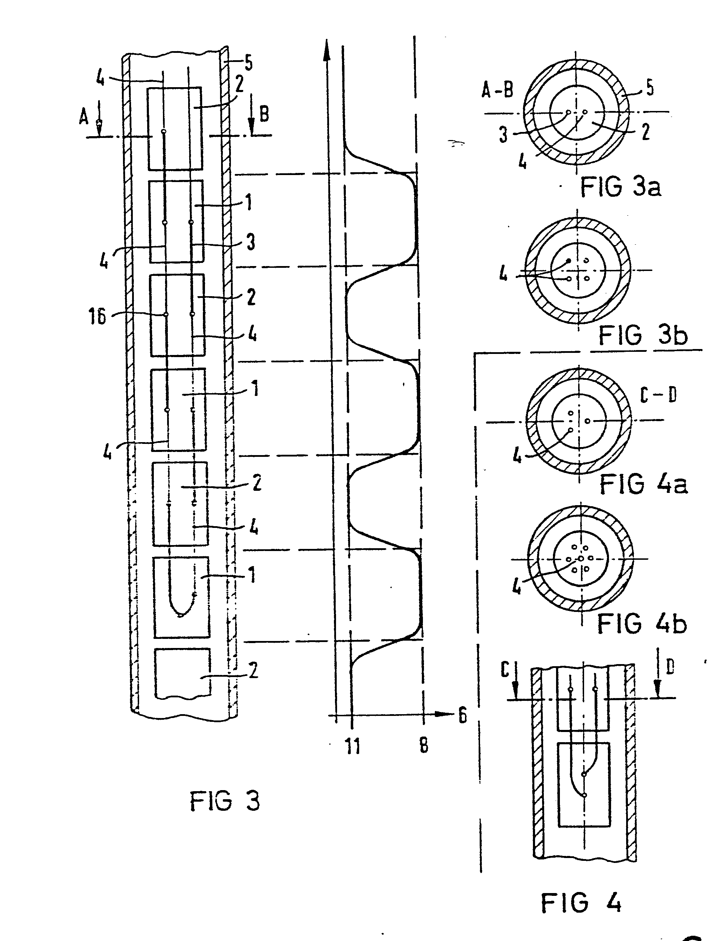

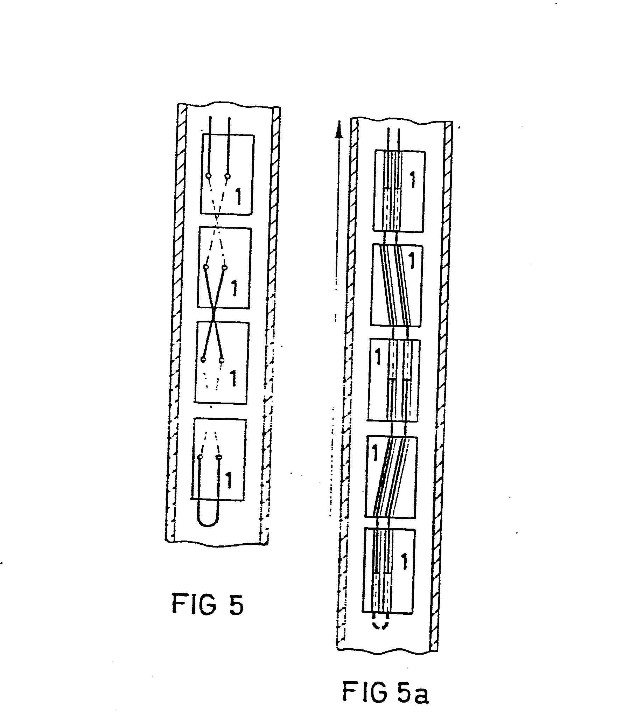

Fig. 1 und 2 den radialen Temperaturverlauf durch
ein Brennstoffpellet und ein Wärmeleitpellet; Fig. 3
eine erfindungsgemäße Vorrichtung im Schnitt mit
dazugehörigem Wärmediagramm; Fig. 3 a einen Querschnitt
längs der Linie A-B in Fig. 3, Fig. 3 b einen Querschnitt durch eine andere Ausführungsform einer erfindungsgemäßen Vorrichtung; Fig. 4 eine weitere
Ausführungsform der erfindungsgemäßen Vorrichtung;
Fig. 4 a einen Querschnitt längs der Linie   C-D  in
Fig. 4; Fig. 4 b einen Querschnitt durch eine
andere Ausführungsform mit sechs Thermoelementen
und einer gemeinsamen Rückführung; Fig. 5 bis 10
weitere Ausführungsformen der erfindungsgemäßen Vorrichtung.

In einem Hüllrohr 5 (Fig. 1, 2 und 3) sind abwechselnd
Spaltstoffpellets 1 und Pellets 2, die keinen oder
weniger Spaltstoff enthalten, angeordnet.

Die Pellets 1 und 2 haben zwei oder mehrere achsenparallele Bohrungen, durch die korrespondierende Drähte
eines Thermoelementes so geführt werden, daß in der
Mitte jedes Pellets 1, 2 die Übergangsstellen zwischen
dem ersten Metall 3 und dem zweiten Metall 4 des
Thermoelementes liegen. Dies ergibt einen Serienschaltung vieler Thermoelemente, deren elektromotorische Kraft sich je nach Übergangsstelle addiert bzw.
subtrahiert und so zu einer gut meßbaren Größe wird.

Mit diesem Prinzip sind eine Reihe von Ausführungsformen möglich, von denen einige in den Querschnittszeichnungen, den Fig. 3 und 4 angedeutet sind. Von
besonderem Interesse ist vielleicht die in Fig. 4
angedeutete Form, die von zwei bzw. sechs einfach
verlaufenden Thermoelement-Strängen eine gemeinsame
Rückführung 4 besitzt, die nun nicht mehr von Übergangsstellen unterbrochen ist. Damit läßt sich entweder
eine Redundanz erzielen oder die sechs Thermoelement-
Stränge werden über die ganze Höhe des Brennelementes
aufgefächert und liefern so bereits eine komplette
Instrumentierungslanze.

Nun ist noch etwas Grundstäzliches zur Realisierung
der eingangs gebrachten Formeln zu sagen. Das Entscheidende an der gesamten Anordnung ist die Abstimmung
der Höhen der beiden Sorten von Pellets. Diese hat
so zu erfolgen, daß im heißen Pellet die Zentraltemperaturen des Brennstoffes entweder einigermaßen
erreicht oder zumindest eine proportionale Größe
erzielt wird. Die Höhe des kalten Pellets sollte
so bemessen sein, daß einerseits der Temperatureinfluß von den benachbarten heißen Pellets nicht zu
groß ist, andererseits soll die Temperatur aber noch
so weit beeinflußt sein, daß sie ein Maß für die
Wärmeströmung durch das Pellet und damit nach den
obigen Zusammenhängen die Messung der lokalen Reaktorleistung ermöglicht. Wird nämlich die Temperatur
des kalten Pellets nur mehr von dem Kühlmittel bestimmt, so ist der eingangs gebrachte formale Zusammenhang gestört.

In Fig. 2 ist ein Vorschlag zur Lösung dieser Frage
gebracht. Danach kann die Zentraltemperatur des kalten
Pellets 12 bis zum Temperatur 11 (Fig. 1) der Außenwand des Hüllrohres an der Stelle des heißen Pellets
absinken.

Daß dies durch die Wahl eines geeigneten Verhältnisses
von Höhe zu Durchmesser des kalten Pellets eingestellt
werden kann, ist leicht einzusehen - umsomehr deshalb,
da es für die ordnungsgemäße Messung hinreichend ist,
wenn sich die Temperatur 13 in Fig. 2 irgendwo zwischen
den Temperaturen 9 und 11 in Fig. 1 einstellt.

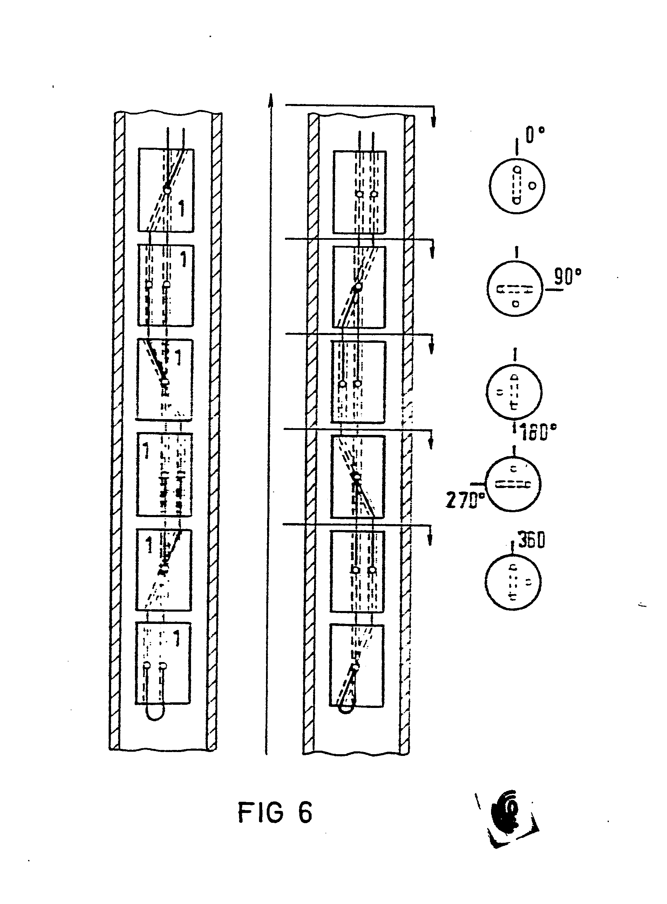

Insbesondere kann das kalte Pellet aus leichten Elementen, etwa Aluminiumoxid bestehen. In diesem Fall
erhält man als Meßsignal eine Größe, die auch den überwiegenden Teil der Gammaheizung in dem heißen Pellet
enthält. Das kalte, leichte Pellet wird zum reinen
"Wärmepellet"
Hat man Meßlanzen oder instrumentierte Brennelemente
zur Verfügung, wo der Durchmesser der Pellets etwas
größer gemacht werden kann (etwa 8 bis 10 mm wie bei
Leichtwasserreaktoren), so ist eine erfindungsgemäße
Anordnung der Übergangsstellen an radial unterschiedlichen Positionen denkbar. Dies hat den Vorteil, daß
im gesamten Detektor nur eine Zone (Brennstoffzone)
benötigt wird. Diese Positionen müssen natürlich nicht
mit  dem Zentrum und der Außenwand identisch sein,
da aus dem formalen Zusammenhang ersichtlich ist,
daß sich jeder radiale Temperaturgradient der lokalen
Brennstableistung proportional verhält. In diesem Fall
ergibt sich eine Anordnung der Übergangsstellen nach
dem formalen Schema, das in Fig. 5 aufgezeigt ist. Fig.
5 a zeigt eine Realisierungsmöglichkeit mit zwei verschiedenen Pelletformen, Fig. 6 zeigt eine mögliche
Realisierung des Schemas, wo nur eine Sorte von bearbeiteten Pellets notwendig ist.
Nun kann durch folgenden erfindungsgemäßen Gedankengang die Zeitstandsfestigkeit dieser Anordnungen von
Thermoelementen weiter erhöht werden. Da der Proportionalitätsfaktor zwischen lokaler Leistungsdichte und Temperaturdifferenz in reellen Anordnungen durch
Kalibration gefunden werden muß, kann die Brennstoffkonzentration der Pellets und damit die Temperatur in
der Anordnung gesenkt werden, ohne die Proportionalität zwischen Thermospannung und lokaler Leistungsdichte wesentlich zu stören. Es verschiebt sich aber
der Anteil der Wärme, der im instrumentierten Pellet
durch Spaltung und Betazerfall der Spaltprodukte
(lokale Wärme) verursacht wird, zum Anteil, der durch
Neutronenbremsung, prompte Gammastrahlung, Einfangprozesse und Gammastrahlung aus Spaltprodukten (verteilte Wärme) hervorgerufen wird (siehe Tabelle).

Tabelle: Wärmefreisetzung pro Spaltung U-235

| Lokale Wärme: | Spaltprodukte | 168 MeV | prompt |
|---|---|---|---|
| | Betazerfall | 7 MeV | verzögert |
| Verteilte Wärme: | Neutronenbremsung | 5 MeV | prompt |
| | prompte Gamma-strahlung | 7,5 MeV | prompt |
| | Gammastrahlung von Spaltprodukten | 6 MeV | verzögert |

Liegt über einen größeren Bereich (einige 10 cm) nur
Brennstoff einer Anreicherung vor, so beträgt die
prompte Wärmeleistung über 93 % der gesamten Wärmeleistung. In einem Bereich unterschiedlicher Anreicherungszonen trägt die verteilt freiwerdende Wärmeleistung (etwa 10%) der höheren Anreicherungszone zur
Wärmeleistung der niederen Anreicherungszone bei. Da
aber bei der verteilt freiwerdenden Wärme ein größerer
Anteil verzögert ist, so verschiebt sich die Detektoranzeige in diesem Fall zu ungunsten der prompten Anzeige.
Verhält sich die Leistung in den Detektorpellets
zu jener der umgebenden Brennstäbe wie 1 : 10, so erhöht sich der Anteil der verzögerten Anzeige von 7%
auf etwa 20%. Dieser Nachteil läßt sich erfindungsgemäß
durch einen kompensierten Detektor beseitigen. Dieser
besteht aus 2 Zonen, von denen die eine Spaltstoff
enthält, während die andere ein nichtspaltendes und
nach Möglichkeit nichtbrütendes Schwermetall enthält,
das aus der Umgebung eine durch Gamma- und Neutronenstrahlung hervorgerufene Wärmeleistung erhält, die
mit jener des Spaltstoffes im Detektor vergleichbar
ist. Unterschiede in der Gammaheizung können aber durch
eine unterschiedliche Zahl von Übergangsstellen der
Thermoelemente in den beiden Zonen kompensiert werden. Weiter  kann die Zusammensetzung des Schwermetalls so gewählt werden, daß es eine ähnliche Betaaktivität zeigt wie die Spaltprodukte, so daß - zumindest in einer vorgegebenen Zeitsequenz - die verzögerte Betaaktivität der Spaltprodukte in ihrer Heizwirkung kompensiert werden kann.
Formal ergibt sich in der Brennstoffzone die Stablei -
stung zu

$$q_{st}^B = q_{st}^{B,p} + q_{st}^{B,v} = 4\pi\overline{\lambda^B}\left(T_o^p - T_1^p\right) + 4\tilde{\pi}\overline{\lambda^B}\left(T_o^v - T_1^v\right)$$

wobei die Indizes p + v andeuten, daß der Temperaturgradient durch prompte und verzögerte Strahlungsanteile hervorgerufen wird. In der Kompensationszone
ergibt sich die Stableistung zu

$$q_{st}^K = q_{st}^{K,p} + q_{st}^{K,v} = 4\tilde{\pi}\overline{\lambda^K}\left(T_o^p - T_1^p\right) + 4\tilde{\pi}\overline{\lambda^K}\left(T_o^v - T_1^v\right)$$

wobei der Temperaturgradient $T_o - T_1$ zerlegt wird in
einen von der prompten Komponente hervorgerufenen
Gradienten $T_o^p - T_1^p$ und einem von der verzögerten
Komponente hervorgerufenen $T_o^v - T_1^v$.

Dies ist durch den linearen Charakter der Gleichungen
möglich. Nun ist der Detektor so zu bauen, daß für m ·
heiße und n kalte Übergangsstellen gilt:

$$m \, 4 \pi \, \overline{\lambda^B} \, (T_0^{\nu} - T_1^{\nu}) = n \, 4 \pi \, \overline{\lambda^K} \, (T_0^{\nu} - T_1^{\nu})$$

Dies kann erfindungsgemäß durch folgende Maßnahmen erreicht werden:

1. Anzahl der Übergangsstellen in Zone 1 und 2
2. Wahl der Wärmeleitfähigkeiten $\overline{\lambda^B}$ und $\overline{\lambda^K}$
3. Wahl der radialen Positionierung der Übergangsstelle
   oder entsprechende Dimensionierung der "Wärmeleitpellets".

Die Übergangsstellen der Thermoelemente sind so anzuordnen, daß das erhaltene Meßsignal proportional
zu der Größe $q_{st}^B - q_{st}^K$ ist, also

$$q_{st}^B - q_{st}^K = 4 \pi \, \overline{\lambda^B} \, (T_0^P - T_1^P) - 4 \pi \, \overline{\lambda^K} \, (T_0^P - T_1^P)$$

und daher ein promptes Leistungssignal abgibt, das
proportional zu dem den Spaltfragmenten mitgegebenen
Anteil der freiwerdenden Energie pro Spaltung (etwa
87%) ist.
Durch die thermoelektrischen Kräfte an den Übergangsstellen ergeben sich nun Spannungen, die der Summe
aller Temperaturdifferenzen $T_0^B - T_1^B$ im Brennstoffpelle
entsprechen

$$U^B = m \, k \, (T_0^B - T_1^B)$$

und im Kompensationspellet

$$U^K = n \, k \, (T_0^K - T_1^K)$$

wobei k die Proportionalitätskonstante zwischen Temperaturdifferenz und Thermospannung darstellt. Damit
erhält man für die totale Stableistung $q_{st}$ der an den
Leistungsdetektor anschließenden Brennstoffzone
das prompte Signal

$$q_{st} = \frac{q_{st}^B - q_{st}^K}{0,87} = \frac{4\pi \overline{\lambda^B} \, \mathcal{U}^B}{0,87 \, m \, k} - \frac{4\pi \overline{\lambda^K} \, \mathcal{U}^K}{0,87 \, n \, k}$$

welches tatsächlich der Differenz der Thermospannungen
in den entsprechenden Übergangsstellen proportional
ist. Für

$$\frac{\overline{\lambda^B}}{m} = \frac{\overline{\lambda^K}}{n} = \frac{\overline{\lambda}}{m}$$

erhält man daher

$$q_{st} = \frac{4\pi \overline{\lambda}}{0,87 \, m \, k} \left( \mathcal{U}^B - \mathcal{U}^K \right)$$

Sind die Thermospannungen nicht im benötigten Temperaturbereich $T_o^B$ bis $T_1^K$ linearisierbar, so gilt

$$\mathcal{U}^B = m \, f \left( \overline{T_o^B}, - \overline{T_1^B} \right)$$

beziehungsweise

$$\mathcal{U}^K = n \, g \left( \overline{T_o^K}, \overline{T_1^K} \right)$$

und daher müssen Konstante $k^i$ gesucht werden, für die
im Arbeitsbereich $\left[ T_o^B, T_1^K \right]$ näherungsweise gilt

$$\mathcal{U}^B = m \, k^B \left( \overline{T_o^B} - \overline{T_1^B} \right)$$

und

$$\mathcal{U}^K = n \, k^K \left( \overline{T_o^K} - \overline{T_1^K} \right)$$

Man erhält dann analog

$$q_{st} = \frac{4\tilde{\pi}\,\overline{\lambda^B}\,\mathcal{U}^B}{0{,}87\ m\ k^B} - \frac{4\tilde{\pi}\,\overline{\lambda^K}\,\mathcal{U}^K}{0{,}87\ m\ k^K}$$

und die Bedingung

$$\frac{\overline{\lambda^B}}{m\ k^B} = \frac{\overline{\lambda^K}}{n\ k^K}$$

oder

$$\frac{\overline{\lambda^B}}{k^B} \cdot \frac{\overline{\lambda^K}}{k^K} = \frac{m}{n}$$

die im allgemeinen durch die Wahl von m und n leicht
zu erfüllen ist.

Ist es dagegen nicht möglich, im Kompensationspellet
die Gammaheizung jener des Brennstoffpellets anzupassen, so folgt aus dem linearen Zusammenhang zwischen
maximaler Leistungsdichte im Brennstab $L_o$, bzw. Stableistung $q_{st}$ und Temperaturgradient

$$q_{st} = 4\tilde{\pi}\overline{\lambda}\,(T_0 - T_1) = \tilde{\pi}\,v_1^2\,L_0$$

$$T_0 - T_1 = \frac{v_1^2}{4}\,\frac{L_0}{\overline{\lambda}}$$

Will man nun in zwei unterschiedlichen Medien, die
verschiedene maximale Gamma-Leistungsdichten $L_0\gamma$
haben, den gleichen Temperaturgradienten erzielen,
so gilt

$$T_0 - T_1 = \frac{v_1^2}{4} \cdot \frac{L_0\gamma^B}{\lambda^B} = \frac{v_1^2}{4} \cdot \frac{L_0\gamma^K}{\lambda^K}$$

und wir bekommen die Bedingung

$$\frac{L_o^B \gamma}{\overline{\lambda^B}} = \frac{L_o^K \gamma}{\overline{\lambda^K}}$$

oder

$$\frac{\overline{\lambda^B}}{\overline{\lambda^K}} = \frac{L_o^B \gamma}{L_o^K \gamma}$$

Dies ergibt mit der vorhergehenden Bedingung

$$\frac{\overline{\lambda^B}}{\lambda^K} = \frac{m}{n}$$

die Möglichkeit, beliebige Kompensationsmaterialien zu verwenden.

Lassen sich die Wärmeleitfähigkeiten nicht nach den unterschiedlichen Gammaheizungen einstellen, gilt also

$$\frac{\overline{\lambda^B}}{\overline{\lambda^K}} \neq \frac{L_o^B \gamma}{L_o^K \gamma}$$

so läßt sich ein hypothetisches $\lambda^K *$ so finden, daß

mit

$$\overline{\lambda^K *} = \frac{m}{n} \overline{\lambda^K}$$

gilt

$$\frac{n \overline{\lambda^B}}{m \lambda^K} = \frac{L_o^B \gamma}{L_o^K \gamma}$$

somit ergibt sich die erweiterte Bedingung für die vollkommene Kompensation der Gammaheizung durch Wahl der Zahl der Übergangsstellen m und n

$$\frac{\overline{\lambda^B}}{L_o^B \gamma} \cdot \frac{L_o^K \gamma}{\lambda^K} = \frac{m}{n}$$

oder

$$\frac{\overline{\lambda^B}}{L_o^B \gamma \, k^B} \cdot \frac{L_o^K \gamma \, k^K}{\lambda^K} = \frac{m}{n}$$

Bei der Erfassung schneller Änderungen der Leistungsdichte gilt für die lokale Stableistung der Zusammenhang näherungsweise

$$q_{st} = \frac{\pi v_a^2 \, c_p \, \rho}{I_o \left( v \sqrt{\Sigma_* B / DB'} \right)} \cdot \frac{dT}{dT} \cdot$$

Will man also auch schnelle Änderungen der Leistungsdichte messen, so ist zu dem Meßsignal die erste Ableitung nach der Zeit zuzufügen, wobei die Messungen
der Temperaturen vorzugsweise in unterschiedlichen
Medien erfolgen sollen:

$$q_{st} = K_1 \left( T_o - T_1 \right) + K_2 \frac{d \left( T_o - T_1 \right)}{dt}$$

Die Kopplungskonstanten $K_1$ und $K_2$ sind so zu wählen,
daß der konstante und der veränderliche Anteil des
Meßsignals den tatsächlichen Zeitverlauf der Stableistung wiedergeben. Meßtechnisch wird die Differentiationszeitkonstante so zu wählen sein, daß sie etwa
mit jener Zeit übereinstimmt, in der sich die Wärmeleitung von einer Übergangsstelle zur zweiten in den
Pellets fortpflanzt. Diese Einstellung ist in der
Praxis leichter durchzuführen, wenn in die Signalmischung auch das Integral der temperaturproportionalen
Meßgröße hinzugefügt wird, also

$$q_{st} = K_1 \left( T_o - T_1 \right) + K_2 \frac{d \left( T_o - T_1 \right)}{dt} + K_3 \int \left( T_o - T_1 \right) dt$$

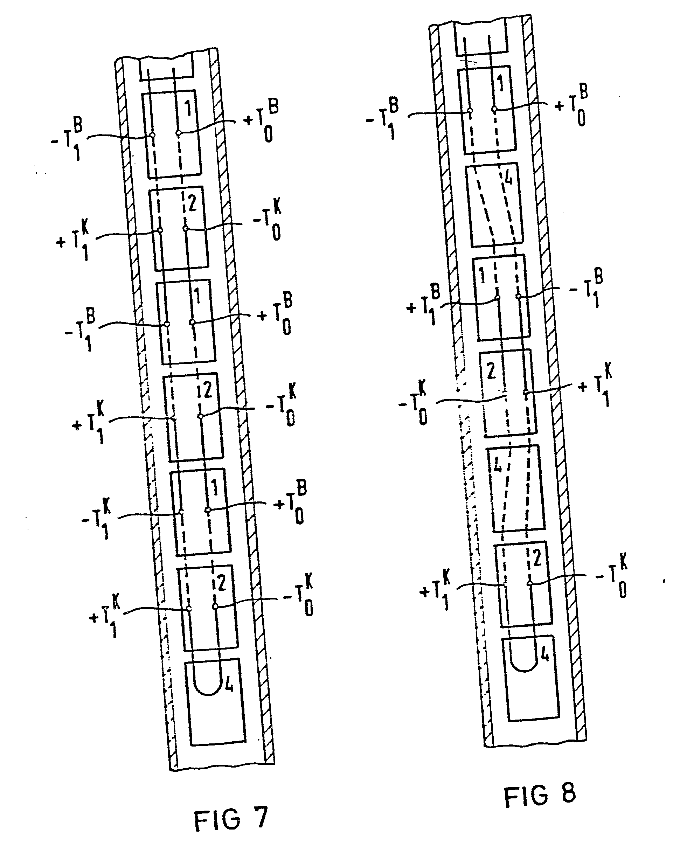

Weitere erfindungsgemäßen Ausführungen der erfindungsgemäßen Vorrichtung sind in den Fig. 7 bis 10 aufgezeigt. Die Fig. 7 und 8 zeigen zwei mögliche Ausführungen des kompensierten Detektors mit zwei Zonen;
die Spaltzone 1 und die Kompensationszone 2 mit jeweils
unterschiedlichen radialen Anordnungen der Übergangsstellen.

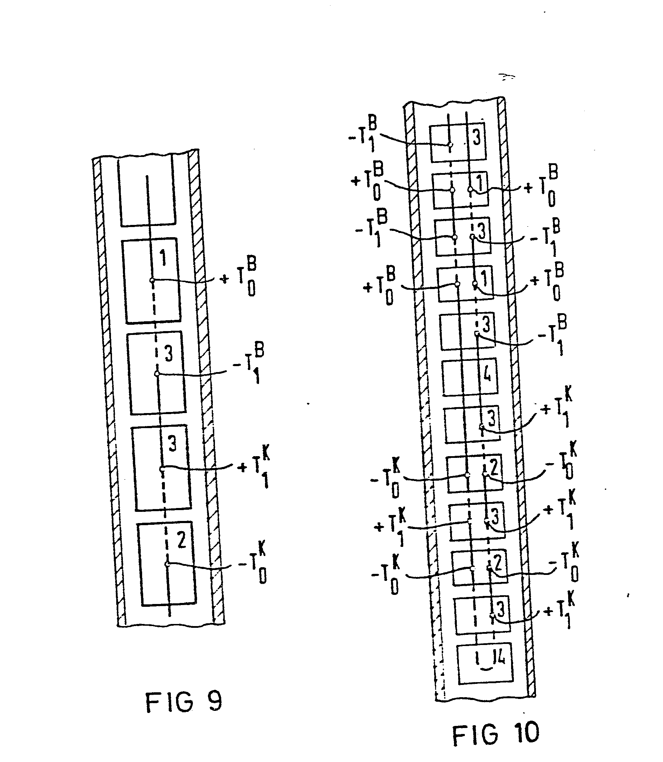

Die Fig. 9 und 10 zeigen zwei mögliche Ausführungen des kompensierten Detektors mit drei Zonen; die Spaltzone 1, die Kompensationszone 2 und die Wärmeleitungszone 3, die in diesem Fall bevorzugt aus leichten Elementen, wie etwa Aluminiumoxid besteht und daher eine zu vernachlässigende Gammaheizung aufweist. In Fig. 10 sind jeweils Abschirmpellets 4 zur Temperaturabschirmung der Wärmeleitungspellets neben der Spaltzone und der Wärmeleitungspellets neben der Kompensationszone vorgesehen, die vorzugsweise ebenfalls aus Aluminiumoxid sind.

INTERATOM                                    24.476.1
Internationale Atomreaktorbau GmbH           VPA 78 P 8564
D-5060 Bergisch Gladbach 1


Verfahren und Vorrichtung zur Messung der lokalen
Leistung in Kernreaktoren

Patentansprüche

1. Verfahren zur Messung der lokalen Leistung in Kernreaktoren mit über den Reaktorkern verteilten instrumentierten Brennelementen bzw. Meßlanzen, dadurch gekennzeichnet, daß in dem instrumentierten Brennelement bzw.
der Meßlanze die Temperatur an zwei oder einem Mehrfachen
von zwei in Abstand voneinander angeordneten Punkten
gemessen und die Temperaturdifferenz zwischen jeweils
zwei Meßpunkten bzw. dem Mehrfachen davon der lokalen
Leistung zugeordnet wird.

2. Verfahren nach Anspruch 1, dadurch gekennzeichnet, daß
in dem instrumentierten Brennelement bzw. der Meßlanze
zwei unterschiedliche Materialzonen vorgesehen sind, an
vier unterschiedlichen Meßpunkten in jeweils mindestens
zwei unterschiedlichen Materialzonen die Temperatur gemessen und die Differenz der beiden Temperaturdifferenzen der lokalen Leistung zugeordnet wird.

3. Verfahren nach Anspruch 1 oder 2, dadurch gekennzeichnet, daß das zur einfachen bzw. doppelten Temperaturdifferenz proportionale Meßsignal nach der Zeit
differenziert wird und eine Mischung zwischen dem
Meßsignal und seiner zeitlichen Ableitung der lokalen
Leistungsdichte im Reaktor zugeordnet wird.

4. Verfahren nach einem der Anspruch 1 bis 3, dadurch
gekennzeichnet, daß das zur einfachen bzw. doppelten
Temperaturdifferenz proportionale Meßsignal getrennt
differenziert und integriert wird und eine Mischung
des Differentials und des Integrals oder alle drei Größen der lokalen Leistung zugeordnet werden.

5. Vorrichtung zur Durchführung des Verfahrens nach einem der Ansprüche 1 bis 4, dadurch gekennzeichnet, daß
in dem instrumentierten Brennelement bzw. der Meßlanze
Pellets aus spaltbarem Material angeordnet sind, und
mindestens zwei Meßpunkte im radialen Abstand in mindestens einem Pellet vorgesehen sind, wobei jeweils zwei
Meßpunkten in Differenz geschaltete Temperaturmeßfühler
(16), wie etwa die Übergangsstellen von Thermoelementen,
zugeordnet sind.

6. Vorrichtung zur Durchführung des Verfahrens nach
einem der Ansprüche 1 bis 4, dadurch gekennzeichnet,
daß in dem instrumentierten Brennelement bzw. der Meßlanze Pellets mit unterschiedlicher Materialzusammensetzung bzw. Brennstoffkonzentration angeordnet sind
und an Meßpunkten gleichen radialen Abstandes die
Temperaturdifferenz durch in Differenz geschalteten
Temperaturmeßfühler  , wie etwa die Übergangsstellen

von Thermoelementen meßbar ist.

7. Vorrichtung nach Anspruch 5 oder 6, dadurch gekennzeichnet, daß die in Differenz geschalteten Paare von
Temperaturfühlern, wie vorzugsweise Thermoelemente,
mehrmals in Serie geschaltet sind.

8. Vorrichtung nach Anspruch 6, dadurch gekennzeichnet,
daß die Abmessungen der Pellets so gewählt sind, daß
die Zentraltemperatur (12) in den kalten Pellets (2),
wenn sie zwischen zwei Spaltstoffpellets (1) angeordnet
sind, zumindest die Temperatur (11) der Außenwand des
Hüllrohres im Bereich der Pellets ( 1) mit Spaltstoff
erreicht.

9. Vorrichtung zur Durchführung des Verfahrens nach
einem der Ansprüche 2, 3 oder 4, dadurch gekennzeichnet, daß in dem instrumentierten Brennelement bzw.
der Meßlanze Pellets mit mindestens vier Meßpunkten,
von denen mindestens zwei verschiedenen radialen Abstand haben, durch Thermoelemente, die in doppelter
Differenz geschaltet sind, meßbar ist.

10. Vorrichtung zur Durchführung der Verfahren nach
einem der Ansprüche 2 bis 4, dadurch gekennzeichnet,
daß in dem instrumentierten Brennelement bzw. der Meßlanze Pellets mit mindestens drei unterschiedlichen
Materialzusammensetzungen angeordnet sind, deren Temperatur vorzugsweise an den gleichen Stellen gemessen
und in doppelte Differenz geschaltet ist.

11. Vorrichtung nach einem der Ansprüche 9 oder 10,
dadurch gekennzeichnet, daß die Anzahl der verschiedenen Meßpunktpaare so bemessen sind, daß sie sich wie die entsprechenden Wärmeleitfähigkeiten in den
unterschiedlichen Pelletmaterialien verhalten.

12. Vorrichtung nach Anspruch 9 oder 10, dadurch gekennzeichnet, daß sich die durch Gammaheizung induzierten Leistungsdichten im Spaltstoffpellet zu jener
im Kompensationspellet so verhalten, wie die entsprechenden Wärmeleitfähigkeiten der Materialien.

13. Vorrichtung nach Anspruch 9 oder 10, dadurch gekennzeichnet, daß sich das Verhältnis der Leitfähigkeit
zur Gammaleistung im Spaltstoffpellet zum analogen
Verhältnis im Kompensationspellet so verhält, wie die
Anzahl der Meßpunktpaare in den entsprechenden Materialien.

14. Vorrichtung zur Durchführung des Verfahrens nach
einem der Ansprüche 3 oder 4, dadurch gekennzeichnet,
daß die Differentiationskonstante und die Integrationszeitkonstante ähnlich der Zeitkonstante zur Wärmeleitung im Pellet zu bemessen ist.

15. Vorrichtung zur Durchführung des Verfahrens nach
einem der Ansprüche 1 bis 4, dadurch gekennzeichnet,
daß die in dem instrumentierten Brennelement bzw. der
Meßlanze befindlichen und vorzugsweise mit Thermoelementen kontaktierenden Spaltstoffpellets eine
deutlich geringere Spaltstoffkonzentration aufweisen,
als die Brennstoffpellets des Kernbereiches, der
das instrumentierte Brennelement bzw. die Meßlanze
umgibt und von diesem auf seine lokale Leistung
vermessen wird.

16. Vorrichtung zur Durchführung des Verfahrens nach einem der Ansprüche 1 bis 4, dadurch gekennzeichnet, daß die in dem instrumentierten Brennelement bzw. der Meßlanze befindlichen und vorzugsweise mit Thermoelementen kontaktierten Spaltstoffpellets aus einer Mischung aus Spaltstoff und Brutstoff bestehen, bei der der Abbrand des Spaltstoffes etwa durch die Konversion von Brutstoff/zu neuem Spaltstoff kompensiert wird.

000868

FIG 1

FIG 2

FIG 3

FIG 3a

FIG 3b

FIG 4a

FIG 4b

FIG 4

FIG 5

FIG 5a

FIG 6

0008684

78 P 8564

FIG 7

FIG 8

$+T_0^B$

$-T_1^B$

$+T_1^K$

$-T_0^K$

**FIG 9**

$-T_1^B$

$+T_0^B$          $+T_0^B$

$-T_1^B$          $-T_1^B$

$+T_0^B$          $+T_0^B$

$-T_1^B$

$+T_1^K$

$-T_0^K$          $-T_0^K$

$+T_1^K$          $+T_1^K$

$-T_0^K$          $-T_0^K$

$+T_1^K$

**FIG 10**

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | BE - A - 861 565 (EL. DE FRANCE)<br>  * Seite 8; Absätze 2,3; Figuren 1-5 *<br>& FR - A - 2 385 187<br>& DE - A - 2 801 253<br>-- | 1,5 |
| A | FR - A - 2 284 991 (LYSIKOV)<br>  * Seite 5, letzter Absatz; Figur 3 *<br>-- | 1 |
| A | GB - A - 1 023 585 (E.E.C.)<br>  * Seite 1, Zeilen 76-90; Seite 2, Zeilen 1-6; Figuren *<br>-- | 1 |
| A | FR - A - 1 248 934 (T.N.E.)<br>  * Seite 2, links Spalte, Absatz 1 *<br>-- | 1 |
| A | DE - B - 1 237 603 (U.K.A.E.A.)<br>  * Spalte 4, Absätze 1,2 * | 1 |

### KLASSIFIKATION DER ANMELDUNG (Int.Cl. )

G 21 C 17/10
G 01 K  1/02

### RECHERCHIERTE SACHGEBIETE (Int.Cl. )

G 21 C 17/10
G 01 K  1/02
        7/04

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 13-11-1979 | KAVCIC |